# EUROPEAN PATENT SPECIFICATION

(11) **EP 0 536 089 B1**
(45) Date of publication and mention of the grant of the patent: **25.06.1997**
(21) Application number: 92830507.7
(22) Date of filing: 22.09.1992
(51) Int. Cl.: B64D 15/04

(54) **A system for discharging the heating fluid from an anti-icing device in the air intake of a turbojet engine at a low pressure and with a high degree of mixing**
System zum Abtransport der Heizflüssigkeit aus einer Anti-Vereisung-Vorrichtung in die Luftzuführung eines Turbostrahltriebwerkes bei niedrigem Druck und mit einem hohen Mischgrad
Système pour décharger à basse pression et avec un haut degré de delution, le fluide chaud d'un dispositif de dégrevage dans l'entrée d'air d'un turboréacteur

(30) Priority: 03.10.1991 IT TO910750
(43) Date of publication of application: 07.04.1993
(73) Proprietor: ALENIA AERITALIA & SELENIA S.p.A., I-80125 Napoli (IT)
(72) Inventor: Farinazzo, Enzo, I-10056 Oulx (Torino) (IT)
(74) Representative: Gustorf, Gerhard, Dipl.-Ing.

(56) References cited:
- EP-A- 0 436 243
- GB-A- 2 204 361
- US-A- 4 482 114

## Description

The present invention relates to an air intake of a turbojet engine containing an anti-icing device as set forth in the preamble of claim 1.

Said anti-icing device is provided in order to prevent ice from forming on the inlet lips of the air intakes of aeronautical turbojet engines.

US-A 4 688 745 describes an anti-icing device for the inlet lip of the air intake of a turbojet engine which provides for hot air drawn from the high-pressure section of the engine to be admitted to an annular chamber defined within the hollow annular casing constituting the air intake of the engine, adjacent the inlet lip of the air intake. The hot air is admitted to the annular chamber in a tangential direction so that a circular flow of hot air is created through the chamber. In this solution, the air is then discharged through holes in an internal partition defining the rear of the annular chamber in the annular casing of the air intake. The air to be discharged passes through the holes into the annular chamber behind the partition and is then discharged to the outside atmosphere through a hole in the outer wall of the casing.

With the system described above for discharging the hot fluid used by the anti-icing device, and particularly with the latest generations of engines which have higher draw-off temperatures and pressures, there is a risk of overheating of the material constituting the casing. The problem becomes particularly dangerous when composite materials are used. In particular, the hot air which enters the annular chamber behind the partition may damage both the sound-deadening panels on the internal wall of the annular casing constituting the air intake and the outer wall if it is made of composite materials.

In order to prevent this latter problem, it has also been proposed to have a single hole in the partition for discharging the hot air from the anti-icing device. In this case, the air discharged through the single hole is directed to the outlet in the outer wall of the casing by a tubular duct within the casing of the air intake. This prevents the hot air from coming into contact with the walls of the casing since it is confined within the duct. A solution of this type is described, for example, in Short Brothers PLC's European patent application EP-A-0 205 283. This second solution, however, has also been found to have disadvantages. In particular, the hot air-flow discharged into the outside atmosphere would tend to flow over the outer wall of the engine housing downstream of the outlet, again causing problems of excessive heating of the material constituting the wall. In order to prevent this problem, the outlet is formed so as to produce a high-pressure discharge jet, thus preventing the jet-from clinging to the outer skin of the engine housing immediately downstream of the outlet. This device, however, presupposes the provision of heavier and more expensive structures in order to withstand the greater pressure of the discharged air-flow. Moreover, the arrangement of the duct gives rise to further structural complications resulting from the different thermal expansion characteristics of the materials constituting the duct and the wall of the engine housing to which the duct must be connected.

The object of the present invention is to provide a new system for discharging the heating fluid from an anti-icing device in the air-intake of a turbojet engine which has none of the disadvantages described above.

According to the invention, this object is achieved by the features set forth in claim 1. Further characteristics are mentioned in claims 2, 3 and 4.

In other words, whereas the prior art, which provided a duct for directing the air to be discharged, sought to prevent the problem of the burning of the outer skin of the engine housing by generating a high-pressure discharge jet so as to prevent the jet of hot air from clinging to the skin of the engine housing immediately downstream of the outlet, the present invention has adopted the opposite approach to that of the aforementioned prior art. According to the invention, the clinging of the jet to the skin of the engine immediately downstream of the outlet is no longer opposed. The structure is arranged, however, to generate a low-pressure jet which is therefore greatly cooled by the external air before it clings to the outer skin of the engine housing so that any risk of over-heating of the material of the casing is prevented.

In a first embodiment, the slots are formed directly in the wall of the annular front chamber of the air intake. If, for example, the anti-icing device is of the type known from the US patent 4,688,745, that is, the type having a nozzle which directs hot air into the annular front chamber, causing it to travel along a circular path through the chamber, the outlet slots may be formed in a portion of the wall of the front chamber which is near the final portion of the circular path.

In a second embodiment, however, the partition has an outlet hole for the hot fluid and the hole communicates with the outlet slots, these slots being formed in the wall of the annular chamber of the air intake behind the partition. The communication takes place through a box-like element defined by the portion of the partition which includes the outlet hole, a portion of the outer wall of the rear chamber adjacent the partition and including the outlet, and a further wall which is joined to the portion of the partition and to the portion of the outer wall of the rear chamber so as to define a compartment separate from the rear chamber, immediately behind the partition.

The invention will now be described with reference to the appended drawings, provided purely by way of non-limiting example, in which:
Figure 1 is a schematic sectional view of a turbo-jet aircraft engine having the system according to the invention,
Figure 2 is a view of a detail of Figure 1, on an enlarged scale,
Figure 3 is a sectioned perspective view of the detail of Figure 2,
Figure 4 is a perspective view of a variant, and
Figure 5 is a perspective view of a second variant with several outlets distributed around its periphery.

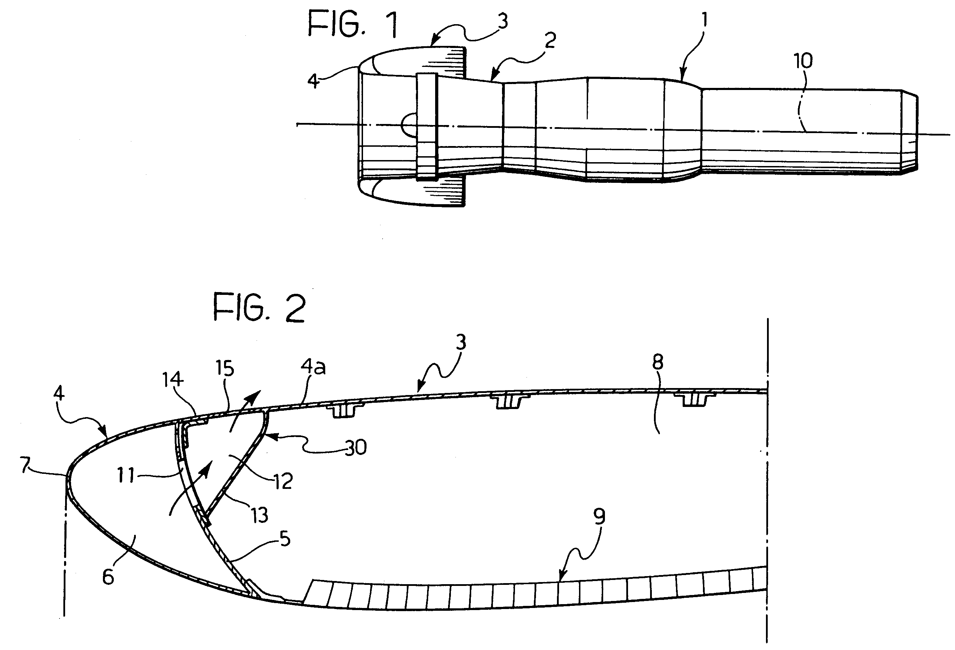

Figure 1 shows schematically a turbojet aircraft engine, generally indicated 1. The engine is housed in a housing 2 with a front air intake 3 constituted by a hollow annular casing 4.

With reference to Figure 2, the annular casing 4 has an internal annular partition 5 which defines within the casing 4 an annular front chamber 6 adjacent the inlet lip 7 of the air intake 3 and a rear chamber 8. The sound-deadening panel on the inner wall of the annular casing constituting the air intake is indicated 9.

The engine described above has an anti-icing device (not shown), for example, of the type in which hot air drawn from the high-pressure section of the engine is directed into the front chamber 6 through a duct (not show in the appended drawings) which opens into the annular chamber 6 in a direction tangential to the axis 10 (Figure 1) of the engine so that a circular flow of hot air is produced in the chamber 6.

According to the invention, the hot air which has flowed through the front chamber 6 is discharged from the engine housing in the following manner.

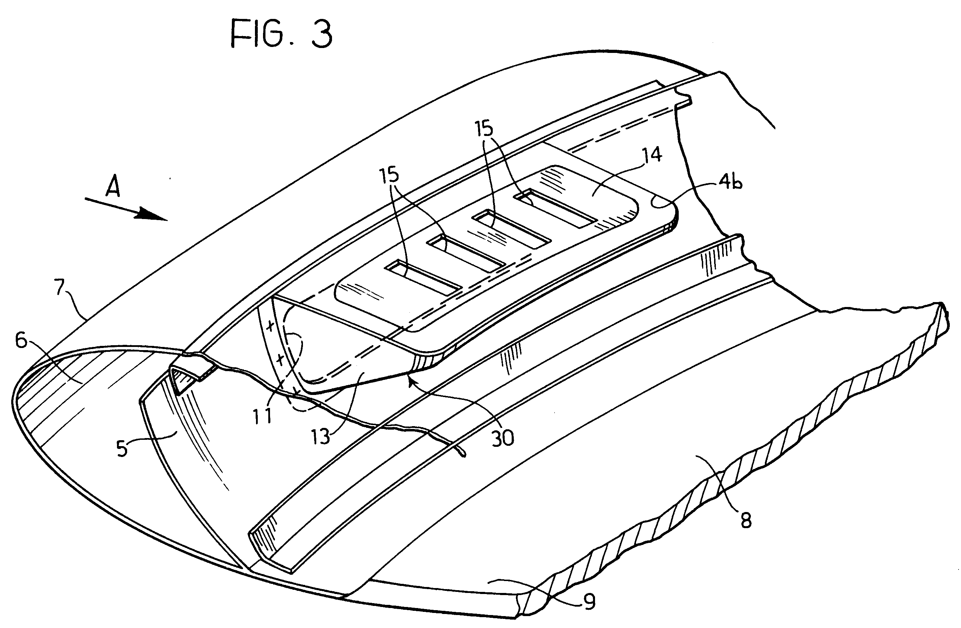

The partition 5 has a single hole 11 which, in the embodiment illustrated, is rectangular and is elongate in a circumferential direction with respect to the axis 10 of the engine (see Figure 3). The air passes through the hole 11 and enters a compartment 12 constituted by the cavity inside a box-like element 30 defined by the portion of the partition 5 which includes the hole 11, a portion 4a of the outer wall 4 adjacent the partition 5, and a wall 13 which is connected to the partition 5 and to the outer wall 4a. More precisely, the outer wall 4a has a fairly wide hole 4b which is covered by a covering element 14 having a plurality of slots 15 arranged substantially along the line of the local external flow (the direction indicated by the arrow A in Figure 3), the length of each slot being considerably greater than its breadth.

The fact that the air to be discharged passes from the annular chamber 6 to the outside atmosphere by flowing through a compartment 12 which is separate from the rear chamber 8 is advantageous since it excludes the risk of the panel 9 being damaged by overheating. At the same time, the shapes and arrangement of the slots 15 are selected so that they create a low-pressure jet of discharged air which therefore undergoes a high degree of mixing with the external air and is thus greatly cooled. Because of its low pressure, the discharged air-flow clings to the outer surface of the engine immediately downstream of the slots 15 but this does not involve any risk of burning of the material constituting the outer panel since the air has been cooled sufficiently as a result of the mixing.

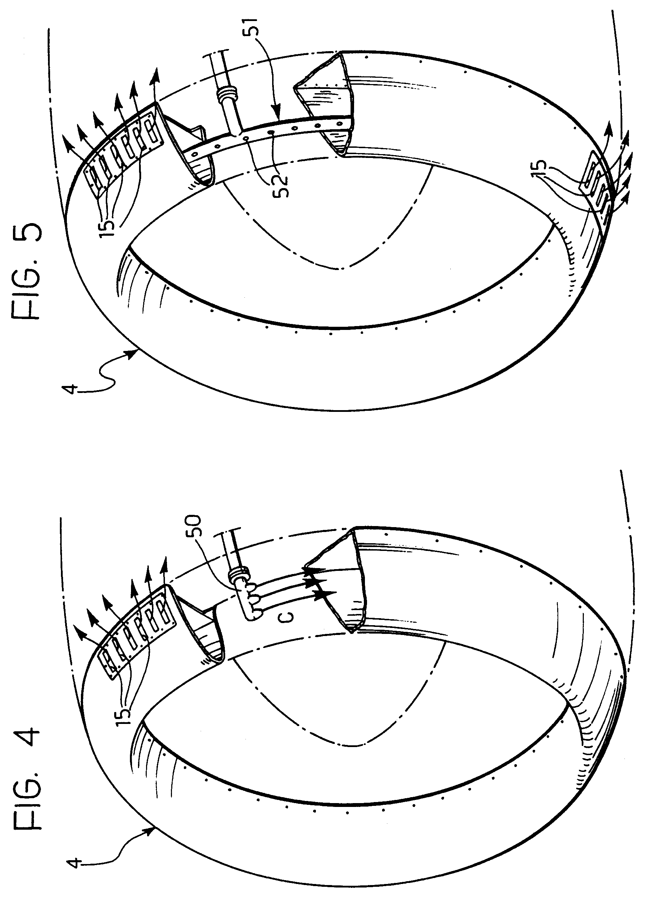

Naturally, the system according to the invention can also be used with anti-icing systems other than that described above, for example, with the anti-icing system illustrated in Figure 5, in which the hot air is directed into the chamber 6 by means of an annular tube 51 with holes 52 and is then discharged to the exterior by means of several outlets distributed around the periphery of the lip of the air-intake.

Naturally, the principle of the invention remaining the same, the details of construction, the number of outlets, their positions (for example, outlets distributed around the periphery rather than in a single position), the shape of any vortex-forming or flow-directing devices, and the forms of embodiment may be varied widely with respect to those described and illustrated purely by way of example, without thereby departing from the scope of the present invention.

In an important alternative discharge system according to the invention, the box-like element 12 and the hole 11 in the partition 5 are omitted and a series of slots is formed, in the manner described above, directly in the front wall of the air intake. This solution is shown in Figure 4 which shows the invention used with an anti-icing device of the type including a nozzle 50 (in this case a triple nozzle) which directs hot air along a circular path through the chamber 6 (indicated by the arrows C). The slots 15 are formed in the front wall near the final portion of the circular path.

## Claims

1. Air intake of a turbojet engine, containing an anti-icing device including a system for discharging the heating fluid from said anti-icing device, in which the air intake (3) has a hollow, annular casing (4) with a partition (5) which defines in the casing (4), adjacent the inlet lip (7) of the air intake (3), an annular front chamber (6) into which a flow of hot fluid is directed in order to prevent ice from forming on the lip (7), and in which the outer wall of the casing (4) of the air intake has an outlet (15) for discharging to the exterior the hot fluid previously directed into the front chamber (6),
characterised in that
the outlet is constituted by a plurality of slots (15) arranged substantially along the line of the local external flow, the length of each slot being considerably greater than its breadth and the slots (15) being shaped and arranged in a manner such as to give rise to a low-pressure discharge flow which undergoes a high degree of mixing with the cold external air and therefore flows over the outer surface of the engine housing immediately downstream of the slots (15), without overheating it by virtue of the cooling resulting from the mixing.

2. Air intake according to claim 1, characterised in that the slots (15) are in the wall of the front chamber (6).

3. Air intake according to claim 2, in which the anti-icing device has means for directing the hot fluid along a circular path in the front chamber (6) from an inlet nozzle, characterised in that the slots (15) are grouped in a region of the wall of the chamber (6) which is near the end of the circular path.

4. Air intake according to claim 1, in which the partition (5) has an outlet hole (11) for the hot fluid and the hole (11) communicates with the outlet (15), the outlet being in the wall of the rear chamber (8) of the air intake, the rear chamber (8) being separated from the front chamber (6) by the partition (5), characterised in that the outlet hole (11) in the partition (5) communicates with the outlet (15) through a box-like element (13) defined by the portion of the partition (5) which includes the outlet hole (11), a portion (4a) of the outer wall of the rear chamber (8) adjacent the partition (5) and including the outlet (15), and a further wall (13) which is joined to the portion of the partition (5) and to the portion (4a) of the outer wall of the rear chamber (8) so as to define a compartment (12) separate from the rear chamber (8), immediately behind the wall (5).

## Patentansprüche

1. Lufteinlaßvorrichtung eines Turbinenstrahltriebwerks mit einer Enteisungseinrichtung und einem System zur Ableitung des Heizmediums aus der Enteisungseinrichtung, wobei der Lufteinlaß (3) einen hohlen, ringförmigen Mantel (4) mit einer Trennwand (5) hat, die in dem Mantel (4) im Anschluß an die Einströmkante (7) des Lufteinlasses (3) eine ringförmige, vordere Kammer (6) bildet, in welche ein Strom eines heißen Mediums geleitet wird, der die Bildung von Eis an der Einströmkante (7) verhindert, wobei die Außenwand des Mantels (4) des Einlasses einen Auslaß (15) für die Abgabe des zuvor in die vordere Kammer (6) geleiteten, heißen Mediums nach außen hat, dadurch gekennzeichnet, daß der Auslaß aus einer Mehrzahl von Schlitzen (15) besteht, die im wesentlichen entlang der Linie des äußeren Stromflusses verlaufen, deren Länge wesentlich größer als ihre Breite ist und die so geformt und angeordnet sind, daß sie eine NiederdruckAblaufströmung erzeugen, die einer hochgradigen Vermischung mit der kalten Außenluft unterliegt und somit in Strömungsrichtung unmittelbar hinter den Schlitzen (15) über die Außenseite des Triebwerksgehäuses strömt, so daß dieses aufgrund der Kühlwirkung des Gemisches nicht überhitzt wird.

2. Lufteinlaßvorrichtung nach Anspruch 1, dadurch gekennzeichnet, daß die Schlitze (15) in die Wand der vorderen Kammer (6) eingearbeitet sind.

3. Lufteinlaßvorrichtung nach Anspruch 2, bei der die Enteisungseinrichtung Mittel zur Führung des heißen Mediums auf einer von einer Einlaßdüse ausgehenden, kreisförmigen Bahn in der vorderen Kammer (6) hat, dadurch gekennzeichnet, daß die Schlitze (15) in einem Bereich der Wand der Kammer (6) gruppiert sind, der sich in der Nähe des Endes der kreisförmigen Bahn befindet.

4. Lufteinlaßvorrichtung nach Anspruch 1, bei der die Trennwand (5) eine Auslaßöffnung (11) für das heiße Medium hat, die in Verbindung mit dem Auslaß (15) ist, der in der Wand der hinteren Kammer (8) des Lufteinlasses liegt, welche hintere Kammer (8) durch die Trennwand (5) von der vorderen Kammer (6) abgeteilt ist, dadurch gekennzeichnet, daß die Auslaßöffnung (11) in der Trennwand (5) mit dem Auslaß (15) über ein kastenartiges Element (30) in Verbindung steht, welches begrenzt wird durch den Teil der Trennwand (5), der die Auslaßöffnung (11) enthält, durch einen Teil (4a) der Außenwand der hinteren Kammer (8), der neben der Trennwand (5) liegt und den Auslaß (15) enthält, und durch eine weitere Wand (13), die mit dem Teil der Trennwand (5) und dem Teil (4a) der Außenwand der hinteren Kammer (8) verbunden ist, wodurch ein Abteil (12) gebildet wird, das unmittelbar hinter der Wand (5) liegt und von der hinteren Kammer (8) abgeteilt ist.

## Revendications

1. Entrée d'air d'un turbo-réacteur comprenant un dispositif de dégivrage avec un système pour évacuer le fluide de réchauffement hors du dispositif de dégivrage, dans lequel l'entrée d'air (3) présente une enceinte annulaire creuse (4) avec un cloissonnement (5) qui forme dans I'enceinte bordant les lèvres (7) de l'entrée d'air (3) une chambre annulaire frontale dans laquelle est admis un courant de fluide chaud destiné à prévenir la formation de givre sur les lèvres (7) et dans laquelle la paroi extérieure de l'enceinte (4) possède un orifice de sortie (15) pour l'évacuation vers l'extérieur du fluide chaud admis auparavant dans la chambre frontale (6), caractérisée en ce que l'orifice de sortie est constitué d'un certain nombre de fentes (15) disposées essentiellement le long de la ligne extérieure de circulation, et dont la longueur est de beaucoup supérieure à la largeur, ces fentes (15) étant formées et disposées de telle façon qu'elles créent un courant d'évacuation à basse pression soumis à un fort mixage avec l'air froid extérieur de sorte que ces courants d'évacuation affleurent en aval des fentes (15) la surface extérieure de la carcasse du turbo-réacteur, empêchant grâce à l'effet refroidissant du mélange la surchauffe de la carcasse.

2. Entrée d'air selon la revendication 1, caractérisée par le fait que les fentes (15) sont pratiquées dans la paroi de la chambre frontale (6).

3. Entrée d'air selon la revendication 2, dans laquelle le dispositif de dégivrage présente des moyens pour guider le fluide chaud dans la chambre frontale (6) le long d'une voie circulaire ayant son orifice dans un injecteur, caractérisée par le fait que les fentes (15) sont ragroupées dans une zone de la paroi de la chambre frontale (6), cette zone se trouvant au bout de la voie circulaire.

4. Entrée d'air selon la revendication 1, dans laquelle le cloisonnement (5) présente une sortie (11) pour le fluide chaud qui est en communication avec l'orifice de sortie (15), lui-même étant pratiqué dans la paroi de la chambre arrière (8) de l'entrée d'air, cette chambre arrière (8) étant séparée de la chambre frontale (6) par le cloisonnement (5), caractérisée par le fait que la sortie (11) pratiquée dans le cloisonnement (5) est en communication avec l'orifice de sortie (15) par un élément en forme de caisson (30) lequel est délimité par la partie du cloisonnement (5) comprenant la sortie (11), par une partie (4a) de la paroi extérieure de la chambre arrière (8) se trouvant au voisinage du cloisonnement (5) et présentant l'orifice de sortie (15), et par une autre paroi (13) reliée à la partie sus-dite du cloisonnement et à la partie (4a) de la paroi extérieure de la chambre arrière (8), de sorte qu' il en résulte un compartiment (12) se trouvant directement derrière la paroi (5) et séparé de la chambre arrière (8).
